# EUROPEAN PATENT SPECIFICATION

(11) **EP 3 064 431 B1**
(45) Date of publication and mention of the grant of the patent: **17.06.2020**
(21) Application number: 16154446.5
(22) Date of filing: 05.02.2016
(51) Int. Cl.: B64C 21/04

(54) **STALL REDUCTION PROPELLER**
PROPELLER ZUR STRÖMUNGSABRISSVERRINGERUNG
HÉLICE DE RÉDUCTION DE DÉCROCHAGE

(30) Priority: 04.03.2015 ES 201530271 U
(43) Date of publication of application: 07.09.2016
(73) Proprietor: Centre Internacional de Métodes Numérics en Enginyeria, 08034 Barcelona (ES)
(72) Inventor: ZARATE ARAIZA, Jose Francisco, 08034 BARCELONA (ES)
(74) Representative: Ungria López, Javier

(56) References cited:
- US-A- 3 005 496
- US-A- 5 813 625
- US-A1- 2009 261 206

## Description

### OBJECT OF THE INVENTION

The present invention relates to a stall reduction propeller of the kind used in fans as well as in devices designed to provide lift (for example, vertical take-off and/or landing (VTOL) aircraft), which due to their specific characteristics, the propellers have a high pitch in relation to their diameters and this causes them to start stalling when they rotate at very high revolutions.

### BACKGROUND OF THE INVENTION

Nowadays, a propeller is defined as a mechanical device comprising a set of blades or vanes, mounted concentrically and integrally around an axis, that when the blades spins, draw a flat surface. Said blades usually have an aerodynamic traverse section, and are oriented to create an angle (angle of attack) between the rotation plane and the blade chord that generates a pressure difference between both faces of the blade or vane, and therefore generates a force perpendicular to the plane of rotation, which is known as lift. In this document and with the aim of making this description, the propeller is considered to be levorotatory.

One of the problems faced by propellers (just as in the case of the plane wings) is stalling due to an excessive angle of attack in relation to the airflow speed over the propeller. In the case of propellers, this is even more significant since said problem also occurs when the pitch of the blades of the propeller (or the angle of attack) is too big. When a certain number of revolutions per minute are exceeded, this turns out in the propeller losing efficiency and also in a lift (or thrust force) dropping of more than fifty per cent, this phenomenon is known as "stall" or "thrust stall".

A propeller usually stalls when its revolutions are very high and there is no incident airflow over the blades. When a propeller is fitted on a vehicle and it moves along the normal direction defined by the propeller rotation plane, the airflow generated by the movement strikes over the blades causing the stall to disappear and the propeller to regain its efficiency.

Another mechanism to prevent the propeller from stalling consists of guiding the blades in relation to the rotation plane. These propellers are known as "variable-pitch propellers". The higher the pitch, the higher the thrust but the rotation velocity of the propeller needs to be reduced, therefore, is not possible to use efficiently the engine power.

This technique has managed to address and control the behaviour of stalling propellers; however, there is a field in which this problem has not been addressed properly, which is the "static propellers", that is, propellers that are not subject to an incident airflow over the blades. This kind of propellers are found in VTOL vehicles, such as, helicopters, drones, or forced air ventilation systems like fans or extractors.

The applicant is aware of the existence of the utility model ES 1 058 948U, which describes a propeller comprising a central core connected to blades that extend radially, characterised in that it comprises a series of internal ducts that start at the front surface of the core and end near to the free tip of each blade. Said invention does not address the problem described above since it uses the incident airflow to assist the rotating power of the engine and not in order to control the stalling propeller behaviour.

The document US 3,005,496 which discloses the technical features of the preamble of claim 1 is considered as the closest prior art document.

### DESCRIPTION OF THE INVENTION

The technical problem which solves the present invention aims to achieve a propeller that reduces the stalling problems when it spins at very high revolutions. In order to accomplish this, in one of the preferred embodiments of the invention the stall reduction propeller comprises at least one blade connected to an axis, where the propeller is characterised in that it comprises: ducts arranged along the length of the blade; nozzles arranged over the surface of the blade and connected to the ducts; the nozzles being located on the middle front part of the extrados; a hub connected to the ducts; a compressor connected to the axis and located inside the hub; so that the compressor generates a controlled airflow which is ducted through the hub and the ducts until it is expelled through the nozzles, thus allowing for the propeller to maintain the boundary layer over the blade.

Therefore, the propeller that is the object of the invention provides an additional airflow over the extrados of the blade, which forces the airflow to become laminar, avoiding the boundary layer separation over the extrados of the blade and reducing the chances of the propeller stalling.

In one or more of the preferred embodiments of the invention, the propeller can also comprise measuring devices located on the blade. The measuring devices can be pressure and/or airflow speed devices over the propeller.

In one or more preferred embodiments of the invention, the nozzles can also be individual or continuous. In a more preferred embodiment with individual nozzles, these incorporate a compatible aerodynamic surface, that is, the geometry of the nozzle is designed in such a way so that it affects as little as possible the airflow over the extrados. In another more preferred embodiment, the individual nozzles incorporate diffusers with the aim of channelling the airflow over the extrados. In a more preferred embodiment for the continuous nozzles, the nozzles extend continuously or by segments from the base to the tip of the blade.

In one or more preferred embodiments of the invention, the compressor is also connected to an additional axis.

In one or more preferred embodiments of the invention, the propeller can also comprise airflow control devices. These devices can be valves and relays.

In one or more preferred embodiments of the invention, the propeller is connected to a control system comprising at least one logic controller device and at least one device to gather and/or send data. In a more preferred embodiment, the control system is connected to the pressure and/or airflow velocity sensors over the blade, to the airflow control devices and to the compressor so that the control system can manage the airflow generated by the compressor and expelled through the nozzles, by regulating the combined effect of the compressor and the flow control devices.

Thanks to its design, the propeller described can be used in aircraft (both civilian and military), helicopters, vertical take-off and/or landing aircraft vehicles, drones, ventilation/extractors systems, etc.

The invention described herein helps to reduce the suction pressure over the extrados by injecting an additional airflow in order to prevent the pressure from exceeding the limit that causes a boundary layer separation, so that there is still a force over the extrados that provides lift without generating turbulences when the angle of attack is beyond the critical limit. This implies a lift increase produced by the intrados since it can operate at higher angles of attack.

A numerical analysis of the reasoning behind the solution proposed in this invention was carried out using computational fluid dynamics analysis (CFD), which verified an improvement of up to 50% of the lift due to the increase of the angle of attack without causing boundary layer separation.

The propeller of the present invention allows increasing the angle of attack of the blade without causing the propeller stall. The pressure increase over the intrados due to a higher angle of attack overcomes the suction pressure decrease over the extrados because of the injected airflow, so that the blade receives a higher lift in total.

The capacity to send an airflow through the nozzles can prevent or at least delay the boundary layer separation so that the aerodynamic profile(s) used by the blade can maintain and increase their lifting capacity or thrust as the angle of attack increases.

All throughout this description and in the claims, the word "comprises" and its variations do not exclude other technical characteristics, additions, components or steps. For experts in the field, other objects, advantages and characteristics of this invention will be deduced partly from the description and partly from when the invention is put into practice. The following drawings and examples are only for illustration purposes, and are not meant to restrict the present invention. Moreover, the present invention includes every possible combination of the specific and the preferred embodiments featured herein.

### BRIEF DESCRIPTION OF THE DRAWINGS

Hereinafter, a series of drawings are described briefly, that help to better understand the invention and which are related deliberately with one of the embodiments of said invention that is shown as an example of the invention without limitation.
FIG 1. Shows a view of a propeller known and/or used in the state of the art, wherein FIG. 1A shows a transverse section of a typical blade, and FIG. 1B shows a propeller plane view.
FIG 2. Shows a schematic plane view of the stall reduction, object of the invention.
FIG 3. Shows a schematic cross-section view of the stall reduction propeller, object of the invention.
FIG 4. Shows a schematic cross-section view of the stall reduction propeller, object of the invention, wherein the compressed airflow entering and leaving the propeller is shown.
FIG 5. Shows a schematic view of the control system (9) of the propeller described herein.
FIG 6. Shows an aerodynamic analysis of a blade profile using computational fluid dynamics (CFD) for a propeller without the present invention.
FIG 7. Shows an aerodynamic analysis of a blade profile using CFD for a propeller with the present invention.

### PREFERRED EMBODIMENT OF THE INVENTION

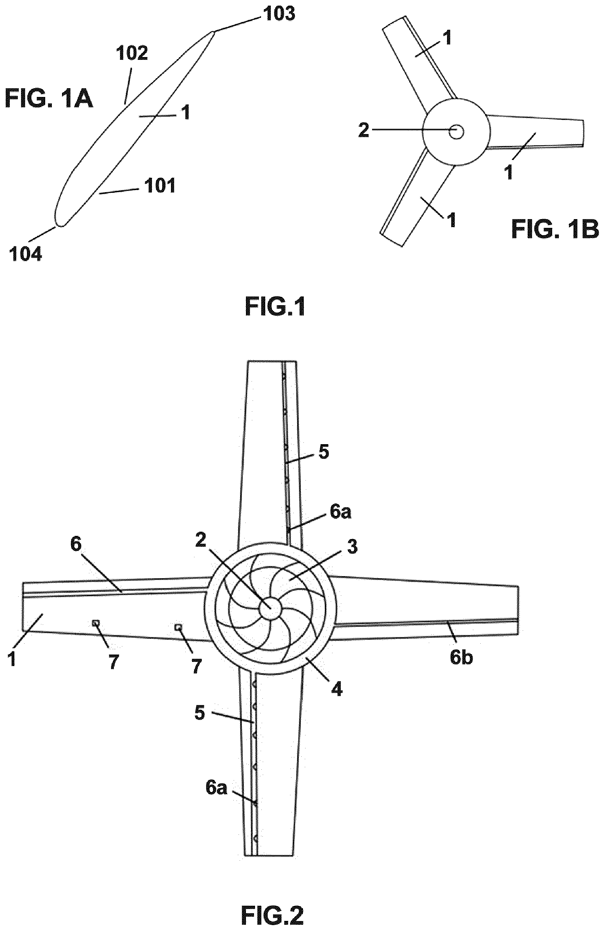

The drawings attached show a preferred embodiment of the invention. Figure 1B shows an example without limitation of a known type of propeller used in the state of the art. Said propeller is essentially comprised by several blades (1) connected to an axis (2). In this case the propeller rotation is dextrorotatory.

Figure 1A shows a transverse section view of the blade profile of the propeller such as the one defined in figure 1B, where the blade (1) and its different essential parts are shown. Thus, the intrados (101) is defined as the lower surface of the profile, while the extrados (102) corresponds to the upper surface.

Therefore, in said blade (1) the leading edge (104) corresponds to the front part of the profile of the blade (1), while the trailing edge (103) is defined by the intersection between the intrados (101) and extrados (102).

More specifically, Figure 2 shows an embodiment of the stall reduction propeller of the present invention that comprises a blade (1) connected to an axis (2) that allows it to rotate. The propeller comprises a compressor (3) that rotates around an axis that coincides with the axis of rotation of the propeller (2) and that is located inside a hub (4) of the propeller; and where said compressor (3) expels an airflow through ducts (5) towards several nozzles (6) located at the blade surface (1).

At the same time, the propeller comprises several measuring devices (7) for the air pressure (7a) and the airflow speed (7b) over the blade. The measuring devices are located preferably at the rear of the extrados (102), though their placement will depend on the installation needs.

The compressor (3) can rotate in opposite direction to the blades (1) so that it reduces the propeller angular momentum.

The nozzles (6) can be installed either punctual or individually (6a), or continuously (6b), forming an exit channel over the extrados (102) depending on the propeller specifications.

In a preferred embodiment, the nozzles (6) are located on the middle front part of the extrados (102).

In a specific embodiment, the individual (punctual) and/or continuous nozzles (6a, 6b) may be covered by aerodynamically compatible surfaces, and with diffusers that project the airflow directly over the extrados (102).

Similarly, the continuous nozzles (6b) run along the blade (1) from the base to the tip of the blade (1), or at least up until where the effects of the tip begin to hamper the performance of the propeller.

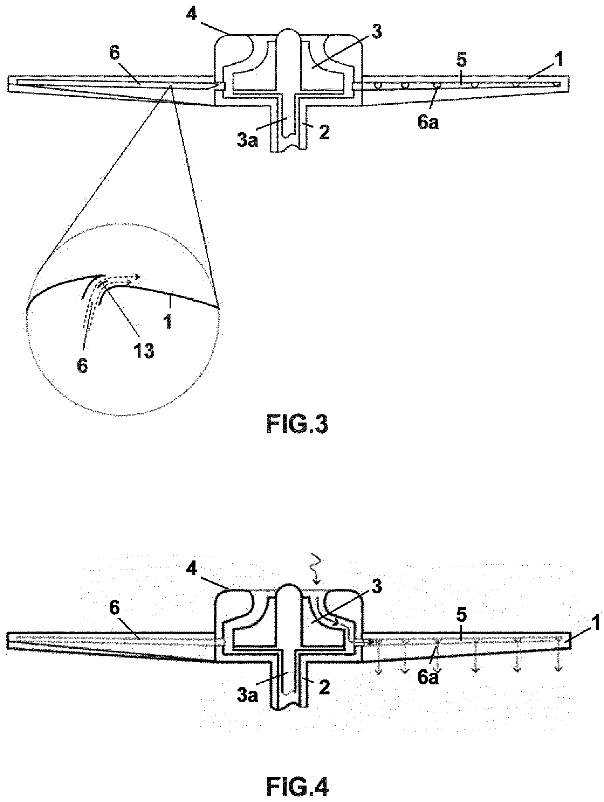

Figure 3 shows a propeller cross-section schematic view that shows in detail how the compressor (3) is connected to an axis (3a) in the same way that the blades (1) are connected to their axis (2) to rotate them. Both axes can be powered by the same engine or by separate devices. Figure 4 shows the same cross-section presented in figure 3, but also showing the airflow scheme entering the hub (4) forced by the compressor (3) until it emerges at the nozzles (6a).

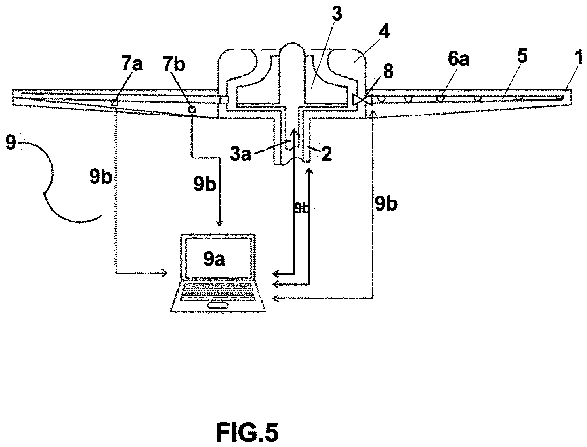

In various specific embodiments, the propeller may incorporate airflow control devices (8) such as valves, relays or similar (as shown in figure 5), in order to optimise the airflow before it is ejected through the nozzles (6a, 6b).

Figure 5 shows a specific embodiment, where the propeller is connected to a control system (9) comprising at least logic controller devices (9a) and Input/Output devices (9b), to monitor and control the propeller performance. In the embodiment shown in figure 5, the control system (9) is connected to the pressure (7a) and/or airflow sensors (7b) on the blade of the propeller, to the airflow control devices (8) and to the compressor (3) so that, the airflow generated by the compressor (3) and expelled by the nozzles (6a) is regulated by said control system (9).

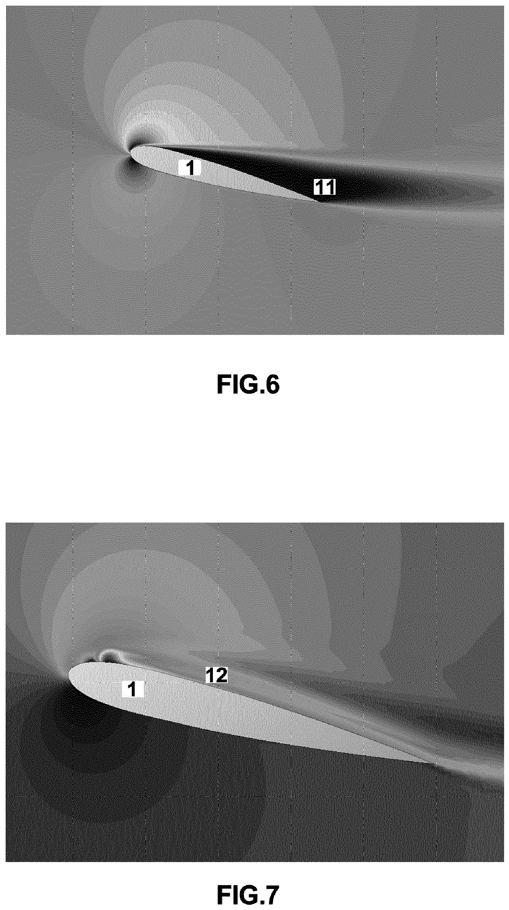

Figures 6 and 7 represent the same aerodynamic profile simulated using computational fluid dynamics (CFD) without the present invention (Fig. 6) and with the present invention (Fig. 7). Figure 6 shows an area (11) where the pressure on the extrados has a zero or negative speed, causing the boundary layer separation. By contrast, figure 7 depicting the blade with the present invention shows an area (12) on the extrados where the airflow speed is above zero, thus avoiding boundary layer separation. The improvements shown in figure 7 over figure 6 represents a 50% in lift due to the increase of the attack angle without causing stall.

## Claims

1. A stall reduction propeller comprising at least one blade (1) connected to an axis (2), where the propeller comprises:
• ducts (5) arranged along the length of the blade (1);
• nozzles (6) arranged on the surface of the blade (1) and connected to the ducts (5);
• a hub (4) connected to the ducts (5);
**characterized in that** the nozzles (6) are located on the middle front part of the extrados (102); and
• a compressor (3) is connected to the axis (2) and located inside the hub (4);
where the compressor (3) generates a controlled airflow which is ducted through the hub (4) and the ducts (5) until it is expelled trough the nozzles (6), providing an additional airflow over the extrados of the blade which forces the airflow to become laminar, thus allowing the propeller to maintain the boundary layer over the blade.

2. A propeller according to claim 1, wherein the propeller comprises measuring devices (7a, 7b) located on the blade (1).

3. A propeller according to claim 1, wherein the nozzles (6) are individual (6a).

4. A propeller according to claim 1, wherein the nozzles (6) are continuous (6b).

5. A propeller according to any of the claims 3 to 4, wherein the nozzles (6) incorporate diffusers (13).

6. A propeller according to claim 4, wherein the continuous nozzle (6b) runs along the blade (1) continuously or by segments from the base to the tip of the blade (1).

7. A propeller according to claim 1, wherein the compressor (3) is connected to a further axis (3a).

8. A Propeller according to any of the claims 1 and 2, which incorporates airflow control devices (8).

9. A Propeller according to any of the claims 1, 2 and 8, wherein the assembly is connected to a control system (9) comprising at least one logic controller device (9a) and at least one device to collect and/or send data (9b).

## Patentansprüche

1. Strömungsabrissverringerungs-Propeller, umfassend ein mit einer Achse (2) verbundenes Blatt (1), wobei der Propeller umfasst:
entlang der Länge des Blatts (1) angeordnete Kanäle (5);
auf der Oberfläche des Blatts (1) angeordnete und mit den Kanälen (5) verbundene Düsen (6);
eine mit den Kanälen (5) verbundene Nabe (4);
**dadurch gekennzeichnet, dass** die Düsen (6) am mittleren Vorderteil des Rückens (102) angeordnet sind; und
ein Kompressor (3) mit der Achse (2) verbunden und in der Nabe (4) angeordnet ist;
wobei der Kompressor (3) einen kontrollierten Luftstrom erzeugt, der durch die Nabe (4) und die Kanäle (5) geführt wird, bis er durch die Düsen (6) austritt, was für einen zusätzlichen Luftstrom über den Rücken des Blatts sorgt, der den Luftstrom dazu bringt, laminar zu werden, wodurch dem Propeller ermöglicht wird, die Grenzschicht über dem Blatt zu halten.

2. Propeller nach Anspruch 1, wobei der Propeller auf dem Blatt (1) angeordnete Messvorrichtungen (7a, 7b) umfasst.

3. Propeller nach Anspruch 1, wobei die Düsen (6) einzeln (6a) sind.

4. Propeller nach Anspruch 1, wobei die Düsen (6) durchgehend (6b) sind.

5. Propeller nach einem der Ansprüche 3 bis 4, wobei die Düsen (6) Diffusoren (13) umfassen.

6. Propeller nach Anspruch 4, wobei die durchgehende Düse (6b) entlang des Blatts (1) durchgehend oder in Segmenten von der Basis zur Spitze des Blatts (1) läuft.

7. Propeller nach Anspruch 1, wobei der Kompressor (3) mit einer weiteren Achse (3a) verbunden ist.

8. Propeller nach Anspruch 1 oder 2, wobei er Luftstrom-Steuervorrichtungen (8) umfasst.

9. Propeller nach einem der Ansprüche 1, 2 und 8, wobei die Baugruppe mit einem Steuersystem (9) umfassend wenigstens eine logische Steuervorrichtung (9a) und wenigstens eine Vorrichtung zum Sammeln und/oder Senden von Daten (9b) verbunden ist.

## Revendications

1. Hélice de réduction de décrochage comprenant au moins une pale (1) raccordée à un axe (2), dans laquelle l'hélice comprend :
• des conduits (5) agencés le long de la longueur de la pale (1) ;
• des buses (6) agencées sur la surface de la pale (1) et raccordées aux conduits (5) ;
• un moyeu (4) raccordé aux conduits (5) ;
**caractérisée en ce que** les buses (6) sont positionnées sur la partie avant centrale de l'extrados (102) ; et
• un compresseur (3) est raccordé à l'axe (2) et positionné à l'intérieur du moyeu (4) ;
où le compresseur (3) génère un écoulement d'air contrôlé qui est conduit à travers le moyeu (4) et les conduits (5) jusqu'à ce qu'il soit expulsé par les buses (6), fournissant un écoulement d'air supplémentaire sur l'extrados de la pale qui force l'écoulement d'air à devenir laminaire, permettant ainsi à l'hélice de maintenir la couche de limite sur la pale.

2. Hélice selon la revendication 1, dans laquelle l'hélice comprend des dispositifs de mesure (7a, 7b) positionnés sur la pale (1).

3. Hélice selon la revendication 1, dans laquelle les buses (6) sont individuelles (6a).

4. Hélice selon la revendication 1, dans laquelle les buses (6) sont continues (6b).

5. Hélice selon l'une quelconque des revendications 3 à 4, dans laquelle les buses (6) comprennent des diffuseurs (13).

6. Hélice selon la revendication 4, dans laquelle la buse continue (6b) s'étend le long de la pale (1) de manière continue ou par des segments de la base à la pointe de la pale (1).

7. Hélice selon la revendication 1, dans laquelle le compresseur (3) est raccordé à un autre axe (3a).

8. Hélice selon l'une quelconque des revendications 1 et 2, qui comprend des dispositifs de contrôle d'écoulement d'air (8).

9. Hélice selon l'une quelconque des revendications 1, 2 et 8, dans laquelle l'ensemble est raccordé à un système de contrôle (9) comprenant au moins un dispositif de contrôle de logique (9a) et au moins un dispositif pour collecter et/ou envoyer des données (9b).
